# EUROPEAN PATENT APPLICATION

(11) **EP 4 660 017 A1**
(43) Date of publication of application: **10.12.2025**
(21) Application number: 25290019.6
(22) Date of filing: 04.06.2025
(51) Int. Cl.: B60R 16/02, H02G 3/22, F16L 5/10, H02G 3/08, H01B 17/58

(54) **GROMMET AND WALL BUSHING AND METHOD FOR PRODUCING THE WALL BUSHING**

(30) Priority: 07.06.2024 EP 24290018
(71) Applicant: Leoni Wiring Systems France, 78180 Montigny le Bretonneux (FR)
(72) Inventor: Mathey, Jean-Marc, 92380 Garches (FR)
(74) Representative: FDST Patentanwälte

(57) **Abstract**

According to the invention the Grommet (14) is designed for a wall bushing (2) and for the sealed passage of a strand (12), in particular a cable, through an opening (10) in a wall (4). The wall (4) is especially a wall (4) of a dash panel of a motor vehicle. The grommet (14) having a grommet body (16) which extends in an insertion direction (E) and which has a proximal sealing section (18) and a distal sealing section (20), which, in the assembled state, receive the wall (4) between them, wherein the distal sealing section (20) is corrugated in the circumferential direction so that it is compressible and can be inserted through the opening (10) in the insertion direction (E). Preferably the distal sealing section (20) comprises a cap element (22) having a cap opening (23) and during assembly the grommet is inserted through the opening (10), while the cap opening (23) is oriented in the insertion direction (E). Afterwards the cap element (22) is folded over such that the cap opening (23) is oriented towards the wall (4) and a distal sealing lip (24) rests on a distal wall side (4B).

## Description

The invention relates to a grommet, in particular for a vehicle, a wall bushing with such a grommet and a method for producing such a wall bushing.

The grommet is used to feed a strand, in particular an electrical cable, through an opening in a wall in a sealed manner. In the present case, this is the wall of a dashboard. The grommet has a proximal sealing section with a proximal sealing lip, which seals a proximal side of the wall when installed. Spaced apart from this in the axial direction, the grommet has a distal sealing section, in particular in the form of a cap, which in particular has a distal sealing lip. The distal sealing section seals a distal wall side. The wall is therefore arranged between the two opposing sealing sections in the assembled state.

During assembly, the grommet is partially inserted through the opening in an axial direction, i.e. in an insertion direction. The distal sealing section is inserted through the opening. As the distal sealing section has a larger dimension than the opening, it must be compressed.

A grommet of this type can be found, for example, in EP 4 148 310 A1. Here, the proximal sealing lip is designed as a resilient sealing lip.

The distal sealing section is also referred to as an acoustic sealing section and the distal sealing lip as an acoustic sealing lip. The acoustic sealing section is used in particular for acoustic sealing. Typically, but not necessarily the wall has an insulation, in particular an acoustic insulation and the acoustic sealing lip rests on this acoustic insulation.

Installation is sometimes complex, as the acoustic sealing section with the cap-like element must be pressed through the opening. At the same time, it must be ensured that the acoustic sealing lip seals reliably in the installed position.

To ensure this, auxiliary tabs are sometimes arranged on the acoustic sealing section, which protrude in the direction of insertion and which can be gripped manually for installation.

It is a task of the invention to provide an improved grommet in which assembly in particular is simplified.

According to the invention, the grommet has a grommet body which extends in an insertion direction and therefore in axial direction. The grommet body has a proximal side and a distal side with a distal sealing section and in particular with a distal sealing lip at the end of the sealing section. Preferably the grommet body has at the proximal side a proximal sealing section, in particular with a proximal sealing lip.

The grommet is generally used for the sealed feed-through of a strand, in particu-lar an electrical cable, through an opening in a wall. The strand extends in the axial direction. In particular, the wall is the wall of a vehicle dashboard. In general, this is a motor vehicle grommet, which is therefore installed in a motor vehicle in its final assembled state. The distal sealing section seals a distal wall side of the wall, especially the distal sealing lip rests on the distal wall side in the assembled state. In the preferred embodiment with additionally a proximal sealing section, the two sealing sections accommodate the wall between them in the assembled state. The distal sealing section Is larger than the opening. In the case of a circular opening, the distal sealing section therefore has a larger radius than the opening. At least a part of the proximal side of the grommet body remains at a proximal side of the wall.

The distal sealing section can generally be inserted through the opening in the direction of insertion. For this purpose, It is elastic and compressible. According to the invention, the distal sealing section is corrugated in the circumferential direction and has a corrugated structure. The corrugated structure allows that at least some sections of the distal sealing section can be folded in the circumferential direction. The circumferential direction is the direction surrounding the axial direction.

The particular advantage of this design is the simplified, elastic compressibility of the distal sealing section, so that it can be easily inserted through the opening. Due to the specific design, folding zones are formed in the circumferential direction, so that the distal sealing section can be folded in the circumferential direction and then unfolded again. In particular, the distal sealing section is formed in the circumferential direction in the manner of an accordion or bellows.

In particular, the distal sealing section is only corrugated in the circumferential direction and not in the axial direction. Therefore, the distal sealing section preferably can only be folded and compressed in the circumferential direction.

This corrugated design simplifies installation, especially with shorter installation times. At the same time, a secure sealing is also reliably achieved. In particular, the additional auxiliary tabs mentioned above preferably have been dispensed with and material is saved. These auxiliary tabs, also called pulling tabs are conventionally attached to the distal sealing section and are used to pull it through the opening during assembly.

According to the invention, a wall bushing is also provided which has a wall with an opening through which a strand and, in particular, an electrical cable is passed in a sealed manner with the aid of such a grommet.

According to the invention, a method for producing such a wall bushing is also provided. In this method, the grommet is passed through the opening with the distal sealing section in front. The distal sealing section seals the distal wall side.

The distal sealing section is, in particular, an acoustic sealing section and the wall has, in particular but not necessarily, an (acoustic) insulation that is specially attached to a sheet-like mounting plate, which is usually made of metal. The distal sealing section rests especially on this insulation with its distal sealing lip (acoustic sealing lip).

The advantages and preferred embodiments mentioned with regard to the grommet can also be applied in principle to the wall bushing and/or the method.

In a preferred embodiment, the distal sealing section has at its front end a circumferential edge which forms a distal sealing lip, with which the distal sealing section, in the assembled state, bears against a distal wall side and circumferentially around the opening.

Preferably, the distal sealing lip is not corrugated. The distal sealing lip therefore has no wavy structure. On the contrary, the distal sealing lip extends in circumferential direction along a straight line. The entire distal sealing lip therefore lies in a common horizontal plane which is perpendicular to the insertion direction. This ensures a reliable sealing with the distal wall side. The combination of the corrugated sealing section with the non-corrugated sealing lip thus allows an easy installation of the grommet and ensures at the same time a reliable sealing, especially a reliable acoustic sealing.

Preferably, in the assembled state only the distal sealing lip bears against the distal wall side. That means that the distal sealing section contacts the wall only with the distal sealing lip, thereby forming preferably only a line contact along the sealing lip. Therefore, the distal sealing section is oriented preferably at an acute angle (<90°) relative to the distal wall side, wherein the acute angle is preferably at least 20° or at least 30°. The distal sealing section, especially a front section with the sealing lip at its end, is therefore oriented steeply with respect to the distal wall side. This ensures a high contact pressure and therefore a good sealing between the sealing lip and the distal wall side.

In a preferred embodiment, the corrugated structure is characterised by the fact that it has alternating corrugated sections in the circumferential direction, which are arranged around the entire circumference, preferably evenly distributed. The corrugated sections are usually elevations and depressions.

Insofar as the term undulating or corrugated is used in the present case, this is generally understood to mean a structure in which at least one and preferably both outer sides of the distal sealing section alternately form elevations and depressions in the circumferential direction. In the preferred embodiment, these are evenly distributed and also over the entire circumference. This is applied especially in the case when the distal sealing section has a circular circumference.

Contrary to an even distribution the corrugated structure and the corrugated sections are not evenly distributed. Especially the distal sealing section comprises some sections in circumferential direction which do not have a corrugated structure. The sections without the corrugated sections are smooth.

Preferably the distal sealing section has an elongated shape perpendicular to the insertion direction and has especially an oval-shaped form. Preferably the distal sealing section has two opposite longitudinal sections connected to each other with curved sections. Preferably only the curved sections have the corrugated sections, while the longitudinal sections are free of corrugated sections and, in particular, are smooth. The sections without corrugations serves to strengthen the distal sealing section and to improve the sealing. Due to the lack of corrugations in the longitudinal sections these sections are less easy to bend.

A decisive factor for both variants - even or uneven distribution - is that the undulating structure creates folding zones in the circumferential direction so that the distal sealing section can be compressed more easily in the circumferential direction.

In a preferred embodiment, the corrugated sections are formed by thicker wall sections on the one hand and thinner wall sections on the other, with the thinner wall sections having a reduced wall thickness compared to the thicker wall sections. The distal sealing section can be easily folded together, especially in the area of the thinner wall sections. These thinner wall sections in particular form folding zones.

Preferably, 20-50 and, for example, 25-40 corrugated sections are distributed around the circumference. These corrugated sections are defined by the elevations and depressions. In the circumferential direction, the corrugated sections, at least the corrugated sections of the same type (i.e. either elevations or depressions), in particular have the same width, and therefore extend over the same angular range. Alternatively, the elevations on the one hand and depressions on the other have different widths.

Preferably, the corrugated sections have a varying width perpendicular to the circumferential direction and thus in the direction of insertion *I* in the axial direction. In a preferred embodiment, the corrugated sections, in particular the depressions (alternatively the elevations), are bulbous and preferably rhombic. Perpendicular to the circumferential direction and thus in the direction of insertion or axial direction, the corrugated sections therefore initially widen to a maximum width and then taper again. This particularly supports the desired foldability. While one type of corrugated section, for example the depressions, is bulbous in the middle, the other type of the corrugated section has a corresponding constriction in the middle.

As already explained above, the term corrugated is to be understood very generally. Viewed in cross-section perpendicular to the insertion direction, the sealing section has a crenellated structure according to a first variant. This is understood to mean a sequence of elevations and depressions with a rectangular cross-section. The individual elevations and depressions can be rounded in the corner areas.

According to an alternative embodiment, the distal sealing section has a triangular or V-shaped structure when viewed in cross-section. In this case, the individual corrugated sections (elevations and depressions) are each formed by triangles, whereby these are preferably of the same size. The individual corner points at which the triangles adjoin each other form fold lines along which the distal sealing section can be folded together in the circumferential direction.

According to a further alternative embodiment, the distal sealing section has a wave-shaped structure. This is understood to mean that the elevations and depressions are each formed by curved lines when viewed in cross-section. For example, the distal sealing section is sinusoidal when viewed in cross-section.

In principle, a variety of corrugated structures are possible that allow the distal sealing section to be easily compressed and folded in the circumferential direction.

In a preferred embodiment, the distal sealing section has a cap element. This is generally understood to mean that the sealing section also extends in the axial direction and thus in the insertion direction in the manner of a cap and widens in the axial direction. The cap element has a cap opening, the circumferential edge of which forms the distal sealing lip. In the assembled state, the distal sealing section lies in particular only with this distal sealing lip on the distal wall side of the wall.

In a preferred design, an inner part of the cap element merges into a base element, which preferably has a passage opening for the strand. Therefore, the cap element adjoins the base element. In particular, a guide sleeve is formed on this base element, which extends in the axial direction and through which the strand is guided in a sealed manner.

In general, the strand is guided in a sealed manner through the proximal sealing section as well as through the distal sealing section.

The cap element generally extends in the axial direction from the base element in the direction of the cap opening and widens at the same time. For example, the cap element is - viewed in a cross section - arc shaped.

In a preferred embodiment, the cap element is designed in such a way and adjoins the base element in such a way that the cap element and therefore the cap opening is foldable from an installation position into a sealing position. By foldable it is understood that the cap opening can be moved ("folded") from the installation position, in which the cap opening is orientated in the insertion direction, into the sealing position, in which the cap opening is orientated in the opposite direction to the insertion direction. In the sealing position, the cap opening is orientated specifically in the direction of the wall. In particular, the distal sealing lip, i.e. the peripheral edge of the cap opening, lies against the distal side of the wall in the assembled state.

The cap element and thus the grommet are preferably designed in such a way that the cap element snaps elastically from the installation position into the sealing position. In particular, the installation position and the sealing position each form stable positions in which the cap element remains unless it is moved to the other position by the action of an external force. At the same time, the material properties and, in particular, the shape of the cap element cause it to snap over elastically.

This design facilitates assembly. During assembly and thus in the method according to the invention, the cap element is in the installation position before and during insertion through the opening. In this installation position, the cap element can simply be compressed and passed through the opening. The cap element is then folded backwards into the sealing position. Preferably, it only needs to be excited briefly to snap into the sealing position. At the same time, this elastic snap-back ensures that the distal sealing lip (acoustic sealing lip) lies reliably against the wall.

This concept for manufacturing the wall bushing, in which the cap element is initially in the installation position and is then folded down after being fed through, is regarded as an independently inventive solution. This concept is therefore independent of the corrugated design of the distal sealing section. The right is reserved to file a divisional application for this independent inventive aspect based on claim 14. For example, a grommet with the features of claim 1 is therefore used for a corresponding inventive method based on claim 15, but without the characterising feature that the distal sealing section is corrugated in the circumferential direction.

In particular, the installation position is a prefabricated position that the grommet assumes immediately after manufacture. This is understood to mean that the installation position is a normal position that the grommet assumes during and after manufacture. The grommet is usually formed by a casting process, whereby the material of the grommet is inserted in a mould for this purpose. The mould is designed in such a way that the grommet and in particular the cap element is produced in the installation position.

This saves time during production, especially during assembly and installation. The grommet can be inserted directly through the opening during subsequent assembly without any additional measures.

The cap element has a circumferential edge at the cap opening, which forms the aforementioned distal sealing lip (acoustic sealing lip). In the assembled state, the distal sealing section and especially only the distal sealing lip is in contact with the distal wall side mentioned above.

In a preferred embodiment the cap element has a base section and a front section, wherein the distal sealing lip is adjacent to the front section. Preferably only the base section is corrugated and the front section is not corrugated. Similar like the non-corrugated distal sealing lip, this ensures a good sealing over the entire circumference.

In the assembled state this non corrugated front section is oriented at the acute angle with respect to the distal wall side as described above. Alternatively, the front section is at least partially flush with the distal wall side, i.e. the front section lies at least partially flat against the distal wall side. During the installation the front section is bent towards the distal wall side such that at least a part of the front section is parallel to the distal wall side.

In a preferred embodiment the front section (with or without corrugations) is inclined with respect to the insertion direction at an inclination angle which differs from an inclination angel of the base section. Preferably the inclination angle of the front section is smaller than the inclination angle of the base section. Due to the different orientations the sealing es enhanced. The different orientations allow that the front section is oriented more steeply with respect to the distal wall side than the base section. Thereby the sealing lip is pressed reliable against the distal wall side.

The non corrugated front section increases the strength of the distal sealing section in the region of the distal sealing lip. At the same time the corrugated base section allows to fold the distal sealing section in the circumferential direction.

Preferably the cap element has - in the installation position - a total axial high, wherein the front section has a partial axial high, which is at least 10% the total axial high, or at least 25%. At most, the partial axial high has preferably a height of 60% of the total axial high.

In a preferred embodiment the cap element has at least one pull tap, by the means of which the cap element can be pulled through the opening. The pull tap is a monolithic part of the cap. Preferably the cap element - when in the installation position - has an inner side and an outer side and the at least one pull tap is preferably arranged at the inner side. This at least one pull tap allows to pull the distal sealing section through the opening during the installation and enables a correct placement of the sealing lip on the distal wall side. Preferably several pull taps are arranged at the cap element.

Examples of the invention are explained in more detail below with reference to the figures. The figures show:
- FIG 1: a cross-sectional view of a wall bushing, with a grommet with a cap element, which is in an installation position,
- FIG 2: the cross-sectional view according to FIG 1, in which the cap element is in a sealing position,
- FIG 3: an isometric view of the grommet with the strand passed through, with the cap element in the installation position,
- FIG 4: an isometric view analogous to FIG 3, but with the cap element in the sealing position,
- FIG 5: a sectional view through a grommet perpendicular to the insertion direction, in which the distal sealing section has corrugated sections formed by thicker and thinner wall sections,
- FIG 6: a sectional view through a grommet perpendicular to the insertion direction, in which the corrugated sections of the distal sealing section are crenellated,
- FIG 7: a sectional view through a grommet perpendicular to the insertion direction, in which the corrugated sections of the distal sealing section are wave-shaped,
- FIG 8: a sectional view through a grommet parallel to the insertion direction according to a further embodiment with a cap element having a non-corrugated front section and
- FIG 9: a sectional view through an elongated grommet perpendicular to the insertion direction with an uneven distribution of corrugated sections.

In the figures the same elements or elements with the same function have the same reference numeral.

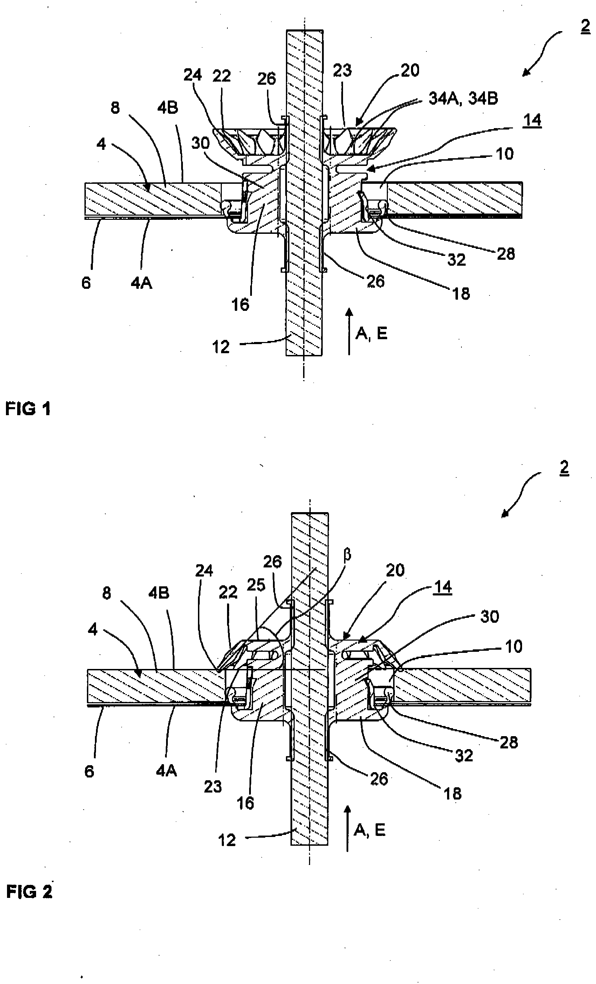

FIG 1 and FIG 2 each show a wall bushing 2 in a sectional view (cut parallel to an axial direction A). The wall bushing 2 has a wall 4, which is preferably formed in several layers with a mounting plate 6 and an (acoustic) insulation 8 attached to it. The wall 4 has an opening 10, through which an elongated strand 12 is passed, which is formed in particular as an electrical cable.

The strand 12 extends along the axial direction A. It is guided through the opening 10 in a sealed manner with the aid of a grommet 14. The grommet 14 has a grommet body 16 produced as a one piece element by a moulding process, which is made of an elastic material, such as EPDM or another suitable material.

The grommet body 16 also extends in the axial direction A, namely in an insertion direction E, which extends parallel to the axial direction A. The grommet body 16 has a proximal sealing section 18 and a distal sealing section 20. This is spaced from the proximal sealing section 18 in insertion direction E. In particular, the distal sealing section 20 has a cap element 22, which has a cap opening 23 on one side. A circumferential edge of the distal sealing section 20 and thus of the cap opening 23 forms a circumferential distal sealing lip 24. The cap element 22 is moulded centrally on a base element 25. In the example described, the base element 25 is plate-shaped and a guide sleeve 26 is formed in its centre.

A guide sleeve 26 is formed on each of the two sealing sections 18, 20, through which the strand 12 is guided in a sealing manner.

The proximal sealing section 18 has a proximal sealing lip 28, which is specially designed as a resilient sealing lip, as described, for example, in EP 4 148 310 A1.

The grommet body 16 also has a central section 30, with which it plunges into the opening 10 in the assembled state. A ring element 32 is preferably fitted around this central section 30, in particular a resilient ring element which is made of metal, for example.

In the cross-sectional views of FIG 1 and FIG 2, the proximal sealing lip 28 is arranged within the opening 10. Alternatively, and normally, this proximal sealing lip 28 is elastically pressed against the wall 4 from the outside, specifically against a proximal wall side 4A, thereby surrounding the opening 10.

For assembly, the pre-assembled unit consisting of grommet 14 and strand 12 is inserted into the opening 10 in the insertion direction E and partially pushed through it so that the distal sealing section 20 is pushed completely through the opening 10.

The cap element 22 is in an installation position shown in FIG 1, in which the cap opening 23 is orientated in the insertion direction E.

After inserting the grommet 14 into the opening, the cap element 22 is folded over so that the cap opening 23 is subsequently in a sealing position, as shown in FIG 2. In this position, the cap opening 23 is orientated towards the wall 4 and the distal sealing lip 24 is in sealing contact with a distal wall side 4B of the wall 4.

It is also of particular importance that the distal sealing section 20 and in particular the cap element 22 is corrugated in the circumferential direction U and thus perpendicular to the insertion direction E.

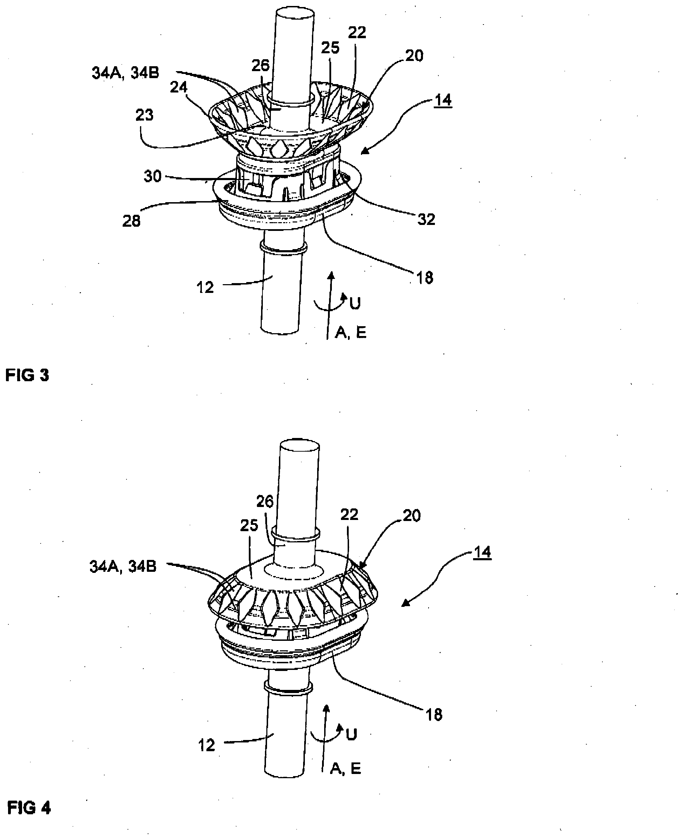

FIG 3 and FIG 4 show isometric representations of the prefabricated grommet 14 with the strand 12 passed through it. As it can be seen, the grommet 14 has an elongated or oval shape *I* elongated oval cross section. Alternatively, the grommet 14 has a round shape with a circular cross section.

FIG 3 shows a prefabricated position of the grommet 14, in which the cap element 22 is in the installation position. By prefabricated position is meant the position in which the grommet body 16 is produced during casting and with the aid of the mould. In contrast, FIG 4 shows the grommet 14 after the cap element 22 has been folded over into the sealing position.

The isometric representations according to FIG 3 and FIG 4 clearly show the undulating configuration in the circumferential direction U. The corrugated configuration generally forms a corrugated structure with corrugated sections 34A, 34B, whereby these are formed by elevations and depressions alternating periodically in the circumferential direction U.

FIG 3 and FIG 4 show a variant in which the individual corrugated sections 34A, 34B have a varying width in the axial direction A and thus perpendicular to the circumferential direction U. In particular, one type of corrugated section 34A is bulbous. In this case, the corrugated sections 34A have a maximum width in their centre and taper at their two end sides. In particular, the corrugated sections 34A in the example shown are approximately diamond-shaped or rhombic,

In the example of FIG. 3 and FIG. 4, the individual corrugated sections are preferably formed by thicker wall sections and thinner wall sections, so that the material thickness varies in the circumferential direction. The diamond-shaped corrugated sections 34A, for example, are formed by the thinner wall sections, so that folding zones are formed. Specifically at these folding zones the cap element 22 can be folded in the circumferential direction so that it can be easily guided through the opening 10.

As can be seen especially from FIG 3 or FIG 4 the distal sealing lip 24 extends in the circumferential direction U along a straight line without undulations. Therefore, the entire sealing lip 24 lies within a common horizontal plane, which is parallel to the distal wall side 4B. The corrugated sections 34a, 34B therefore do not extend until the distal sealing lip 24, which is free of any corrugations. The sealing lip 24 lies reliably on the distal wall side 4b over its entire length, which ensures a good sealing.

The distal sealing section 20 has a front section which extends in the axial direction A and with the sealing lip 24 at its end. The front section is inclined relative to the distal wall side 4B in the assembled state at an acute angle β as shown in FIG 2. This acute angle β is for example in the range between 20° and 70°

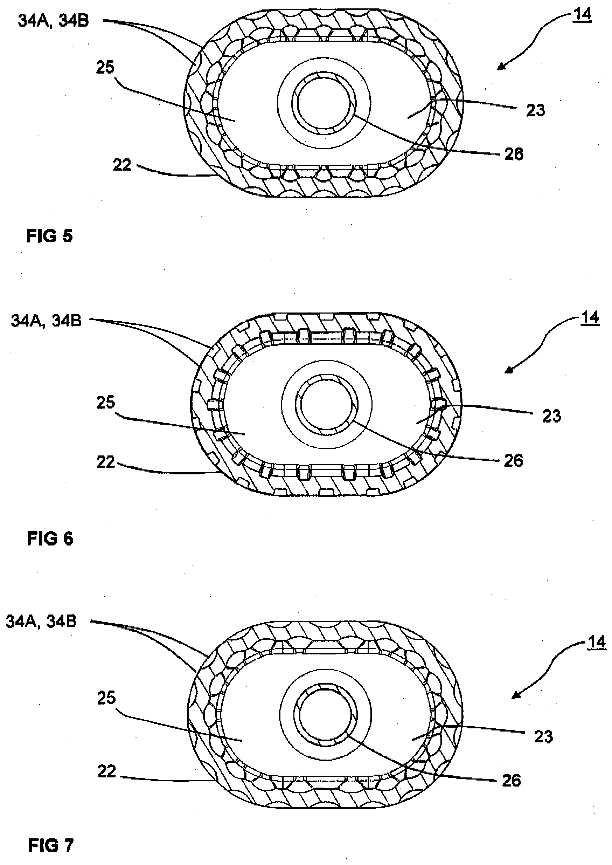

FIG 5 shows a view of a cross-section perpendicular to the axial direction A and thus perpendicular to the insertion direction E, looking from above at the cap element 22 as shown in FIG 3. The central base element 25 and the guide sleeve 26 can be seen in the centre.

The thinner wall sections (e.g. the corrugated sections 34A) and the thicker wall sections (e.g. the corrugated sections 34B) can be clearly recognised from this cross-sectional view. Overall, this results in the wave-like, corrugated structure.

FIG 6 and FIG 7 show sectional views analogous to FIG 5 of alternative variants for the corrugated structure. The distal sealing section 20 and therefore the corrugated sections 34A, 34B according to FIG 6 show a crenellated structure, with essentially rectangular elevations and depressions.

The distal sealing section 20 and therefore the corrugated sections 34A, 34B according to FIG 7 show a wave-shaped structure, having curved sections and an overall sinusoidal course, for example,

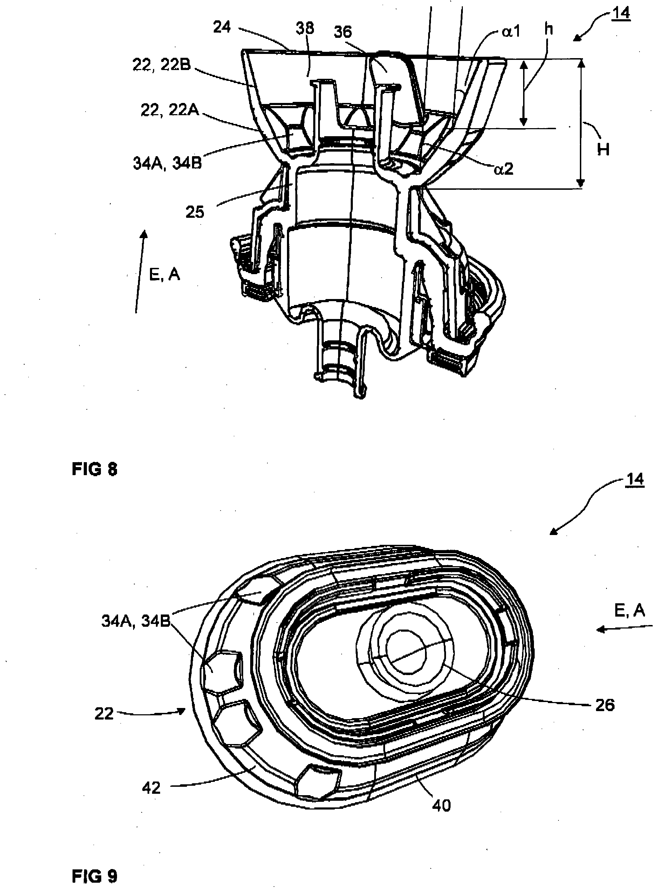

FIG 8 is a sectional view parallel to the axial direction A of the grommet 14 according to a further embodiment. The cap element 22 has two sections extending in axial direction A and adjoining each other in axial direction A *I* insertion direction E, namely a base section 22A, which adjoins the base element 25 and a front section 22B. The distal sealing lip 24 adjoins the front section 22B.

Both sections 22A and 22B extend in axial direction A and also in the radial direction.

In general, the base element 25 is of tubular and especially cylindrical design having a side wall extending in particular parallel to the axial direction A. This tubular section is positioned within the through-hole (opening 10) of the wall 4 in the assembled state. The cap element 22 and therefore the base section 22A begins at the end of his tubular section and *I* or at an axial position where the distal sealing section 24 widens in radial direction.

The cap element 22 has a total high H in the insertion direction E and the front section 22B has a partial high h in insertion direction. In the embodiment according to FIG 8 the partial high h is about 50% of the total High H. In general, the partial high h of the front section 22B is preferably less than or equal to the partial high of the base section.

The front section 22B is preferably smooth without any corrugations 34A, 34B, which enhances the stability of the distal sealing section 24 in the area of the distal sealing lip 24.

Additionally, the grommet 14 according to FIG 8 has pull taps 36 (only one can be seen in FIG 8). This pull taps 36 serves to pull the distal sealing section 20 through the opening 10 during installation and to enable a correct placement of the sealing lip 24. Preferably the grommet 14 has several pull taps 36, for example three pull taps, which are evenly distributed in circumference direction U.

The at least one pull tap 36 is preferably part of the cap element 22 and a monolithic part of the cap element 22.

In the embodiment according to FIG 8 the at least one pull tap 36 is formed on an inner side 38 of the cap element 22. This inner side 38 is directed towards the cen-tre of the grommet 14 when the grommet 14 is in the installation position as shown in FIG 8. In the assembled state this inner side 38 forms an outer side of the grommet 14.

The cap element 22 according to FIG 8 preferably has a circular cross section (perpendicular to the axial direction A).

Additionally, as can be seen in FIG 8, the two sections 22A, 22B are inclined relative to the axial direction at different inclination angles α1, α2. The inclination angle α1 of the front section 22B is preferably smaller than the inclination angle α2 of the base section 22A. Therefore, the base section 22B is oriented more steeply compared to the front section 22A. This results in high contact pressure and therefore a good sealing between the distal sealing lip 24 and the distal side wall 4B. The difference between the two inclination angles α1, α2 is for example at least 5° or at least 10° and preferably not more than 30°.

The inclination angle α1 of the front section 22B is for example at least 10 ° and furthermore at least 20° and is for example in the range of 10° to 50°.

The inclination angle α1 of the front section 22B defines at the same time the acute angle β of the distal sealing section 20 in the assembled state as described with respect to FIG 2. The acute angle β is complementary to the inclination angle α1 of the front section 22B (β = 90° - α1, if necessary, corrected by a difference angle if the front section 22B is widened when pressed against the distal wall side 4B in the assembled state).

FIG 9 shows another embodiment of the grommet 14 which has an elongated and longitudinal or oval shape. FIG 9 is a sectional view perpendicular to the axial direction A and a kind of a front view of the distal sealing section 20, seen in the axial direction A in the case when the grommet 14 is in its installation position.

The grommet 14 has two opposite longitudinal sections 40 extending in the circumferential direction U which are connected to each other by curved sections 42. The two opposite longitudinal sections 40 preferably extend parallel to each other. In this embodiment the corrugated sections 34A, 34b are unevenly distributed in the circumferential direction U. Especially the longitudinal sections 40 are smooth and do not have corrugated sections. 34A, 34B.

The grommet 14 described here particularly can easy to be mounted. Due to the corrugated design of the distal sealing section 20 in the circumferential direction U, it can be easily compressed during assembly and thus easily pushed through the opening 10.

Since the installation position (in which the cap opening 23 is orientated in the insertion direction E) is the prefabricated normal position, the effort and therefore the time required to assemble the prefabricated unit consisting of grommet 14 and strand 12 is low. The prefabricated unit is delivered to the assembly location for the motor vehicle, for example.

The assembly sequence described here, with the distal sealing section 20 being passed through with the cap element 22 in the installation position and the subsequent folding over into the sealing position, also ensures simple assembly, in which a sealing contact of the distal sealing lip 24 with the distal wall side 4B is ensured. This avoids assembly errors in particular. Finally, the previously described auxiliary tabs are also dispensed with, thus saving material. Alternatively, as shown in FIG 8, such auxiliary tabs (pull taps 36) are arranged at the cap element 22.

### List of reference symbols

- 2: wall bushing
- 4: Wall
- 4A: proximal wall side
- 4B: distal wall side
- 6: mounting plate
- 8: insulation
- 10: opening
- 12: strand
- 14: grommet
- 16: grommet body
- 18: proximal sealing section
- 20: distal sealing section
- 22: cap element
- 22A: base section
- 22B: front section
- 23: cap opening
- 24: distal sealing lip
- 25: base element
- 26: guide sleeve
- 28: proximal sealing lip
- 30: central section
- 32: ring element
- 34A, 34B: corrugated sections
- 36: pull tap
- 38: inner side
- 40: longitudinal section
- 42: curved section
- A: axial direction
- E: insertion direction
- U: circumferential direction
- H: total High

- h: partial High
- α1, α2: inclination angle
- β: acute angle

## Claims

1. Grommet (14), in particular for a vehicle, for the sealed passage of a strand (12), in particular a cable, through an opening (10) in a wall (4), having a grommet body (16) which extends in an insertion direction (E) and which has a distal sealing section (20), wherein the distal sealing section (20) is elastically formed so that it is compressible and can be inserted through the opening (10) in the insertion direction (E), **characterised in that** the distal sealing section (20) is corrugated in the circumferential direction (U).

2. Grommet (14) according to the preceding claim, **characterised in that** the distal sealing section (20) has a circumferential edge which forms a distal sealing lip (24) with which the distal sealing section (20), in the assembled state, bears against a distal wall side (4B) and circumferentially around the opening (10), wherein the distal sealing lip is not corrugated.

3. Grommet (14) according to the preceding claim, **characterised in that** in the assembled state only the distal sealing lip (24) bears against the distal wall side (4B) wherein the distal sealing section (20) preferably bears against the distal wall side (4B) at an acute angle (β), which is preferably at least 20° or at least 30°.

4. Grommet (14) according one of the preceding claims, **characterised in that** the distal sealing section (20) has alternating corrugated sections (34A, 34B) in the circumferential direction, especially elevations and depressions, which are preferably evenly distributed around the entire circumference.

5. Grommet (14) according to the preceding claim, **characterised in that** the distal sealing section (20) has an elongated shape perpendicular to the insertion direction (E), wherein the corrugated sections (34A, 34B) are not evenly distributed in the circumferential direction (U), wherein the distal sealing section (20) preferably has two opposite longitudinal sections (40) connected to each other by curved sections (42), wherein only the curved sections have the corrugated sections (34A, 34B).

6. Grommet (14) according to the preceding claim, **characterised in that** the corrugated sections (34A, 34B) having at least one of the following features:
- the corrugated sections (34A, 34B) are formed by thicker wall sections and thinner wall sections, the thinner wall sections having a reduced wall thickness compared to the thicker wall sections,
- the corrugated sections (34A, 34B) have a varying width in the insertion direction (E)
- the corrugated sections (34A, 34B) have a central thickening and are in particular rhombic in the insertion direction (E).

7. Grommet (14) according to one of the preceding claims, **characterised in that**, viewed in a cross section perpendicular to the insertion direction (E), the distal sealing section (20) optionally has a crenellated, triangular or wave-shaped structure.

8. Grommet (14) according to one of the preceding claims, **characterised in that** the distal sealing section (20) has a cap element (22).

9. Grommet (14) according to the preceding claim, **characterised in that** the cap element (22) adjoins a base element (25) in such a way that a cap opening (23) can be folded over from an installation position, in which the cap opening (23) is oriented in the insertion direction (E), into a sealing position, in which the cap opening (10) is oriented in the opposite direction,

10. Grommet (14) according to one of claim 8 or 9, **characterised in that** the cap element (22) has a base section (22A) and a front section (22B), wherein only the base section (22A) is corrugated and the front section (22B) is not corrugated.

11. Grommet (14) according to one of claims 8 to 10, **characterised in that** the cap element (22) has a base section (22A) and a front section (22B), the front section (22B) being inclined with respect to the insertion direction (E) at an inclination angle (α1) which differs from an inclination angel (α2) of the base section (22A), wherein the inclination angle (α1) of the front section (22B) is preferably smaller than the inclination angle (α2) of the base section (22B).

12. Grommet according to claim 10 or claim 11, **characterised in that** the cap element (22) has - in the installation position - a total axial high (H), wherein the front section (22B) has a partial axial high (h), wherein the partial high (h) is at least 10% and preferably is at least 25% of the total high (H)

13. Grommet (14) according to one of the claims 8 to 12, **characterised in that** the cap element (22) has at least one pull tap (36), by the means of which the cap element (22) can be pulled through the opening (10), wherein the cap element (22), when in the installation position, has an inner side (38) and the pull tap (36) is preferably arranged at the inner side (38).

14. A wall bushing (2) comprising a wall (4) having an opening (10) through which a strand (12) is passed in a sealed manner by means of a grommet (14) according to any one of the preceding claims, wherein the distal sealing section (20) seals the opening (10) at a distal wall side (4B), wherein the wall (4) preferably has a mounting plate (6) and an (acoustic) insulation (8) attached thereto, and the distal sealing section (20) rests on the insulation (8) with a distal sealing lip (24).

15. A method for producing a wall bushing (2) according to the preceding claim, wherein the grommet (14) is passed through the opening (10) with the distal sealing section and wherein the distal sealing section (20) seals the distal wall side (4B), wherein the distal sealing section (20) preferably has a cap element (22) which has a cap opening (23), the cap element (22) being in an installation position when passing through the opening (10), in which the cap opening (23) is orientated in the insertion direction (E), the cap element (22) then being folded over so that the cap opening (23) is orientated in the direction of the distal wall side (4B).
